# EUROPEAN PATENT APPLICATION

(11) **EP 3 176 067 A1**
(43) Date of publication of application: **07.06.2017**
(21) Application number: 15826636.1
(22) Date of filing: 03.08.2015
(51) Int. Cl.: B62M 11/04

(54) **OVERRUNNING TRANSMISSION DEVICE CONVENIENT FOR SWITCHING**

(30) Priority: 01.08.2014 CN 201410377428
(71) Applicant: Chongqing Hijoy Industry Group Co. Ltd., Chongqing 401120 (CN)
(72) Inventor: RAN, Gengshu, Chongqing 401120 (CN)
(74) Representative: Høiberg P/S
(86) International application number: PCT/CN2015/085969
(87) International publication number: WO 2016/015682

(57) **Abstract**

The present invention discloses an overrunning transmission device convenient for switching. The transmission device comprises a transmission gear and a transmission shaft (102) which is arranged to penetrate a shaft hole of the transmission gear, wherein at least one clamping groove (105) is formed at an edge of the shaft hole of the transmission gear; a chamber is formed in transmission shaft (102) which extends in the axial direction of the transmission shaft (102), and a clamping plate (104) is provided in the chamber; and an end of the clamping plate (104) can move in the chamber back and forth along the radial direction of the transmission gear so that the end of the clamping plate (104) can be inserted into or removed from the clamping groove (105), thereby the transmission shaft (102) and the transmission gear can be engaged and separated with each other. The overrunning transmission device convenient for switching can make the switching smooth and save energy effectively.

## Description

### TECHNICAL FIELD OF THE INVENTION

The present invention relates to a transmission device, especially relates to an overrunning transmission device convenient for switching.

### BACKGROUND OF THE INVENTION

Transmission is an intermediate device for transmitting the power of a power unit to a working mechanism or the like, taking motor vehicle as an example, the basic function of a transmission is to transmit power from an engine to wheels to produce a driving force, so that the vehicle can travel at a certain speed.

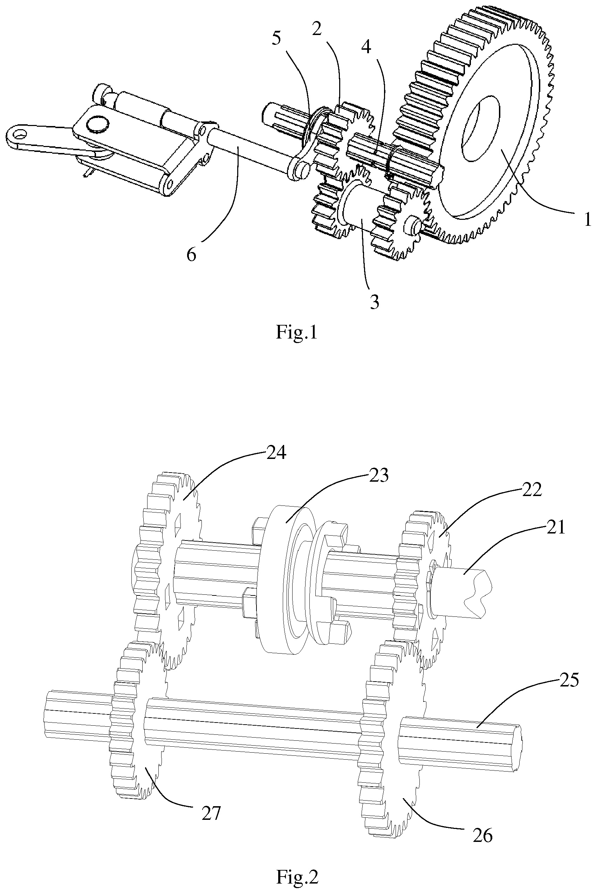

Fig.1 shows a transmission device used in a known motor vehicle for rotation direction switching, the transmission device comprises an output gear 1, a driving gear 2 and a reverse gear set 3. Wherein the output gear 1 is connected with a differential mechanism (not shown) and can rotate forward and reversely, so as to drive the motor vehicle move forward and backward.

Driving gear 2 is connected with a driving shaft 4, the driving shaft 4 is connected to an output shaft of an engine (not shown), and the driving gear 2 can be driven to rotate by the driving shaft 4, so as to provide an original power for the rotation of the output gear 1. In addition, the driving gear 2 is connected with a shifting rod 6 which is placed in a gearshift via shifting board 5. Under the drive of the shifting rod 6, the driving gear 2 can move axially on the driving shaft 4, so as to engage with the output gear 1 and reverse gear set 3 respectively, thus making the output gear 1 rotate forward and reversely or making the motor vehicle move forward and backward.

One end of the reverse gear set 3 is close to the output gear 1 and is always engaged with the output gear 1. The other end of reverse gear set 3 is away from output gear 1 and is placed at the position where the other end can be engaged with driving gear 2, thus the reverse gear set 3 can make the output gear 1 rotate in reverse direction.

To make the motor vehicle move forward: operate the gearshift mechanism (not shown), the shifting rod 6 drive the driving gear 2 to move toward output gear 1 via the shifting board 5, make the driving gear 2 engage with output gear 1. Thus output gear 1 is driven to rotate forward through driving gear 2, which makes the motor vehicle move forward.

To make the motor vehicle move backward: operate the gearshift mechanism (not shown), the shifting rod 6 drive the driving gear 2 to move away from output gear 1 via the shifting board 5, make the driving gear 2 engage with one end of the reverse gear set 3. Thus the output gear 1 is driven to rotate reversely through the driving gear 2 and the reverse gear set 3, which makes the motor vehicle move backward.

As shown in Fig. 2, in said known motor vehicle, the transmission device for speed switching comprises a driving shaft 21, an output gear 25 and two transmission gear sets (high speed transmission gear set and low speed transmission gear set). Wherein the high speed transmission gear set comprises a driving gear 24 sleeved on the driving shaft 21 and a driven gear 27 sleeved on the output gear 25, the driving gear 24 is engaged with the driven gear 27. The low speed transmission gear set comprises a driving gear 22 sleeved on the driving shaft 21 and a driven gear 26 sleeved on the output gear 25, the driving gear 22 is engaged with the driven gear 26.

A wheel 23 is arranged between the driving gear 22 and the driving gear 24, the driving gear 22 and the driving gear 24 are respectively provided with a meshing hole, and the wheel 23 is provided with a meshing claw. In addition, the wheel 23 can be connected with a shifting rod (not shown) placed in a gearshift via a shifting board (not shown). Under the drive of the shifting rod, wheel 23 can move axially on the driving shaft 21, so as to couple with the driving gear 22 and the driving gear 24 respectively, which makes the output shaft 25 rotate in high and low speed or makes the motor vehicle move fast and slowly.

To make the motor vehicle move slowly: operate the gearshift mechanism (not shown), the shifting rod can drive the wheel 23 to move toward the driving gear 22 via the shifting board, make the meshing claw of wheel 23 engage with the meshing hole of the driving gear 22. Thus the output shaft 25 is driven to rotate through the driving shaft 21, the driving gear 22 and the driven gear 26, which makes the motor vehicle move slowly.

To make the motor vehicle move fast: operate the gearshift mechanism (not shown), the shifting rod drive the wheel 23 to move toward the driving gear 24 via the shifting board, make the meshing claw of wheel 23 engage with the meshing hole of driving gear 24. Thus the output shaft 25 is driven to rotate through the driving shaft 21, the driving gear 24 and the driven gear 27, which makes the motor vehicle move fast.

In the known motor vehicle, the transmission device used for rotation direction and speed switching has the following deficiencies:
1) As to the transmission device for rotation direction switching, in the switching process, in order to realize a switch between forward and backward movement, the driving gear 2 should be close to and engaged with the output gear 1, or the driving gear 2 should be close to and engaged with one end of the reverse gear set 3. The output gear is driven to rotate through the coupling or engaging between gears with a large difference in diameter, and a collision and block are easily occurs between gears with a different diameter, thus it is hard to make the gears engage with each other normally, which make the switch process fails and also damage the gear.
2) As to the transmission device for rotation direction switching, during the process of driving, when the rotational speed of the output gear 1 is greater than the rotational speed of driving shaft 4, i.e. the phenomenon of "overrunning" occurs, instead the output gear 1 may drive the driving shaft 4 to rotate and the engine operates under unfavorable load, which shorts the vehicle slide distance and wastes fuel.
3) As to the transmission device for speed switching, the above deficiencies also exist, that is to say, the deficiencies of collision and block between the meshing claw and meshing hole, and the deficiencies of "overrunning".

### SUMMARY OF THE INVENTION

The purpose of the present invention is to provide an overrunning transmission device convenient for switching, which can switch smoothly and save energy.

In order to achieve the above purposes, the technological solutions of the overrunning transmission device convenient for switching are as follow:

An overrunning transmission device convenient for switching comprises a transmission gear and a transmission shaft which is arranged to penetrate a shaft hole of the transmission gear, wherein at least one clamping groove is formed at an edge of the shaft hole of the transmission gear; a chamber is formed in transmission shaft which extends in the axial direction of the transmission shaft, and a clamping plate is provided in the chamber; and an end of the clamping plate can move in the chamber back and forth along the radial direction of the transmission gear so that the end of the clamping plate can be inserted into or removed from the clamping groove, thereby the transmission shaft and the transmission gear can be engaged and separated with each other.

An overrunning transmission device convenient for rotation direction switching, for driving the output gear to rotate forward and reversely comprises: a driving shaft, used for providing power for the output gear to rotate; a forward gear, engaged with a output gear, the driving shaft can be engaged with the forward gear so as to drive the output gear to rotate forward; a reverse gear, engaged with a output gear, the driving shaft can be engaged with the reverse gear so as to drive the output gear to rotate reversely; wherein the driving shaft passes through the shaft hole of the forward gear, at least one clamping groove is arranged on the edge of the shaft hole of forward gear, a chamber is provided on the driving shaft, a clamping plate is arranged in the chamber, wherein the end of clamping plate can move back and forth within the chamber in radial direction of the forward gear, thus the end of clamping plate can be inserted into or removed outside from the clamping groove, so that the driving shaft are capable of engaging with and separating from the forward gear.

An overrunning transmission device convenient for speed switching, for driving the output gear to rotate in high speed and low speed, comprises: a driving shaft, used for providing power for the output shaft to rotate; at least two transmission gear sets, and each transmission gear set transmits a different speed, so as to make output gear to rotate in high speed and low speed; each transmission gear set comprises a driving gear and driven gear that are engaged with each other, wherein the driving gear is sleeved on driving shaft, driven gear is sleeved on output gear, wherein the driving gear is capable of engaging with and separating from the driving shaft, or the driven gear is capable of engaging with and separating from output gear; in the driving gear and driving shaft or the driven gear and output gear, which are capable of engaging with and separating from each other, the shafts pass through the shaft hole of the gears, at least one clamping groove is arranged on the edge of the shaft hole of gears, a chamber is provided on the shafts, a clamping plate is arranged in the chamber, wherein the end of clamping plate can move back and forth within the chamber in radial direction of the gears, thus the end of clamping plate can be inserted into or removed outside from the clamping groove, so that the aforesaid shafts are capable of engaging with and separating from the gears.

Compared with the transmission device in the prior art, the overrunning transmission device convenient for switching of the present invention has the following advantages:
1) As to the overrunning transmission device convenient for switching of the present invention, the output gear is driven to rotate by means of the coupling or engaging between the clamping plate and the clamping groove, rather than through the coupling or engaging between gears (especially for the gears with a large difference in diameter) or through the coupling or engaging between claw and hole (the claw and hole are prone to conflict with each other and difficult to engage together), which greatly improves the success rate and smoothness of switch.
2) As to the overrunning transmission device convenient for switching of the present invention, the end of clamping plate can partially enter into clamping groove, when the phenomenon of "overrunning" occurs, the user can release the coupling between the driving shaft and the transmission gear, which greatly reduces the inertia energy loss of a motor vehicle and avoids wasting fuel when the engine operates in "overrunning" state.
3) As to the overrunning transmission device convenient for switching of the present invention, when the "overrunning" state is not required or allowed, the end of clamping plate can completely or entirely enter into the clamping groove, which avoides the occurrence of "overrunning" and improves the safety.

### BRIEF DESCRIPTION OF THE DRAWINGS

Fig. 1 is a schematic view illustrating a known transmission device for rotation direction switching;
Fig.2 is a schematic view illustrating a known transmission device for speed switching;
Fig. 3 is a front view illustrating the first embodiment of the present invention;
Fig.4 is a sectional view illustrating the first embodiment of the present invention;
Fig.5 is a top view illustrating the driving shaft and chamber according to the first embodiment of the present invention;
Fig.6 is a top view illustrating the elastic component installed in the chamber according to the first embodiment of the present invention;
Fig.7 is a perspective view illustrating the drum-shaped ball according to the first embodiment of the present invention;
Fig. 8 is a perspective view illustrating the clamping plate according to the first embodiment of the present invention;
Fig.9 is a side view illustrating the first embodiment of the present invention;
Fig. 10 is a schematic view illustrating the clamping plate and clamping groove according to the first embodiment of the present invention, wherein the clamping plate and clamping groove are in a fully engaged state;
Fig.11 is a schematic view illustrating the location of the clamping plate when the slide unit is engaged with the reverse gear set according to the first embodiment of the present invention;
Fig.12 is a front view illustrating the second embodiment of the present invention;
Fig.13 is a cross-sectional view illustrating the second embodiment of the present invention;
Fig. 14 is a top view illustrating the driving shaft and chamber according to the second embodiment of the present invention;
Fig.15 is forward cross-sectional view illustrating the driving shaft and chamber according to the second embodiment of the present invention;
Fig.16 is a schematic view illustrating the clamping plate and meshing groove according to the second embodiment of the present invention, wherein the clamping plate is engaged with the meshing groove;
Fig.17 is a schematic view illustrating an end of the clamping plate that close to the meshing gear according to the second embodiment of the present invention;
Fig.18 is a cross-sectional view illustrating the third embodiment of the present invention;
Fig.19 is a schematic view illustrating the overrunning transmission device of the present invention applying to a speed switching system;
Fig.20 is a cross-sectional view illustrating the fourth embodiment of the present invention;
Fig.21 is a cross-sectional view illustrating the slide unit in Fig.20;
Fig.22 is a cross-sectional view illustrating the clamping plate in Fig.20;
Fig.23 is a cross-sectional view illustrating the fifth embodiment of the present invention;
Fig.24 is a cross-sectional view illustrating the slide unit in Fig.23;
Fig.25 is a cross-sectional view illustrating an example of the clamping plate in Fig.23;
Fig.26 is a cross-sectional view illustrating another example of the clamping plate in Fig.23;
Fig.27 is a cross-sectional view illustrating the sixth embodiment of the present invention;
Fig.28 is a cross-sectional view illustrating the slide unit in Fig.27;
Fig.29 is a cross-sectional view illustrating an example of the clamping plate in Fig.27;
Fig.30 is a cross-sectional view illustrating another example of the clamping plate in Fig.27.

### DETAILED DESCRIPTION OF EMBODIMENTS

The above and other objects, features and advantages of the present invention will be more clearly understood from the following detailed description taken in conjunction with the accompanying drawings.

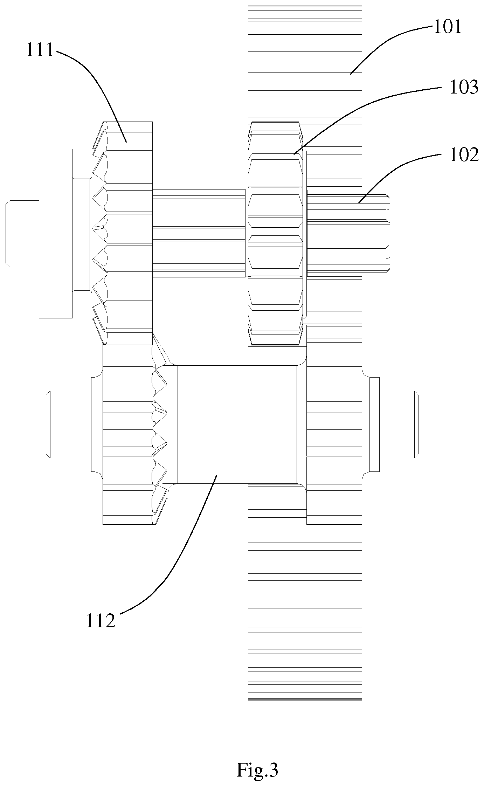

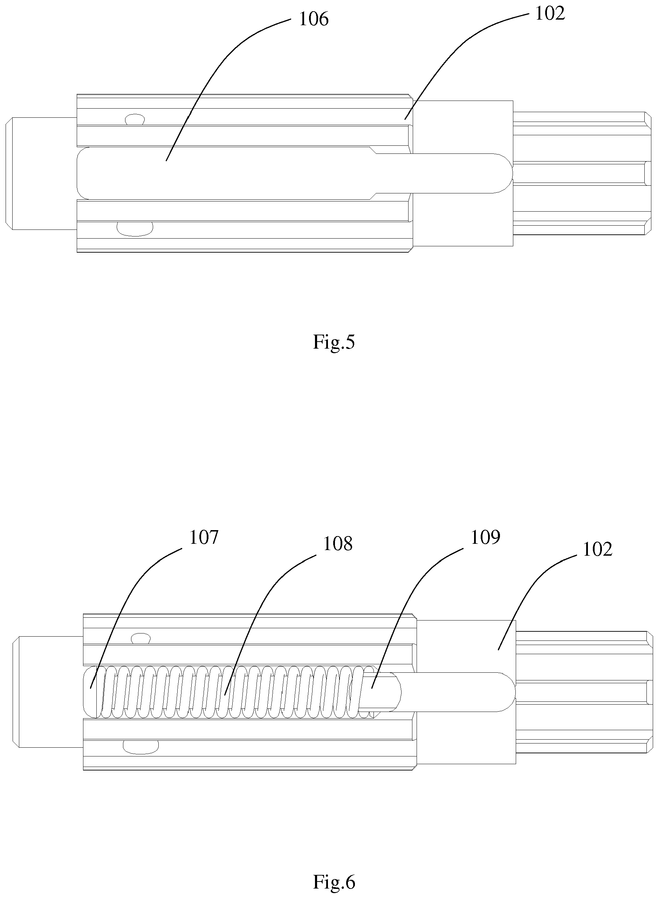

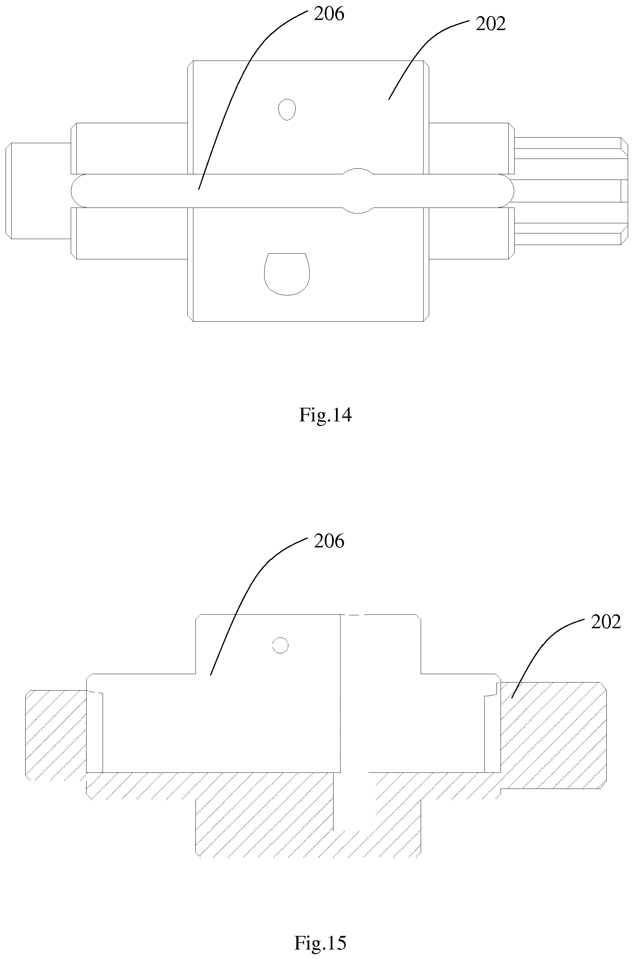

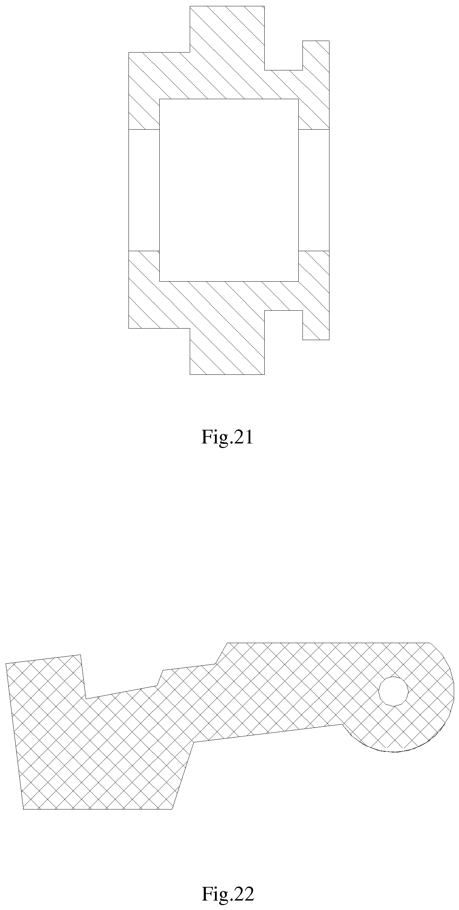

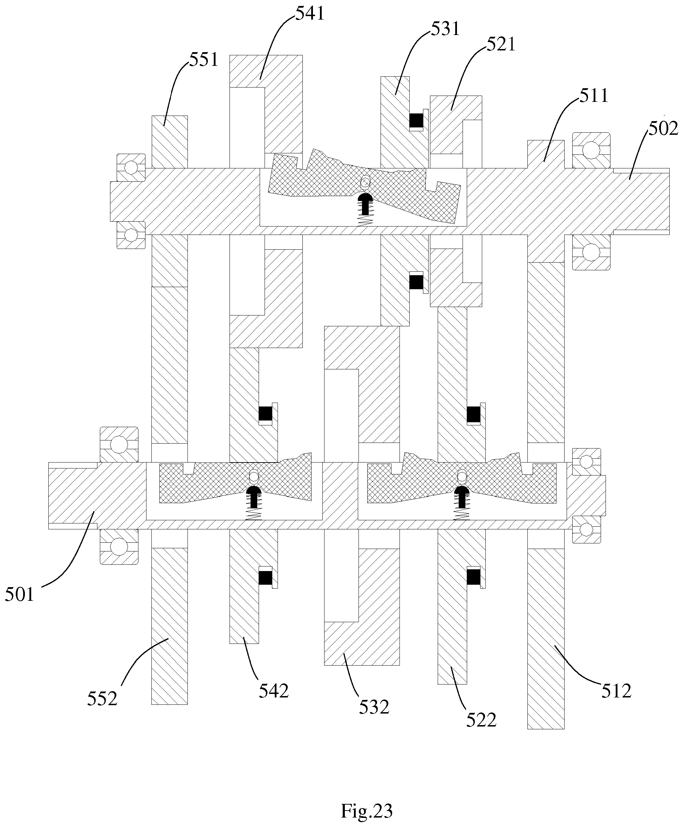

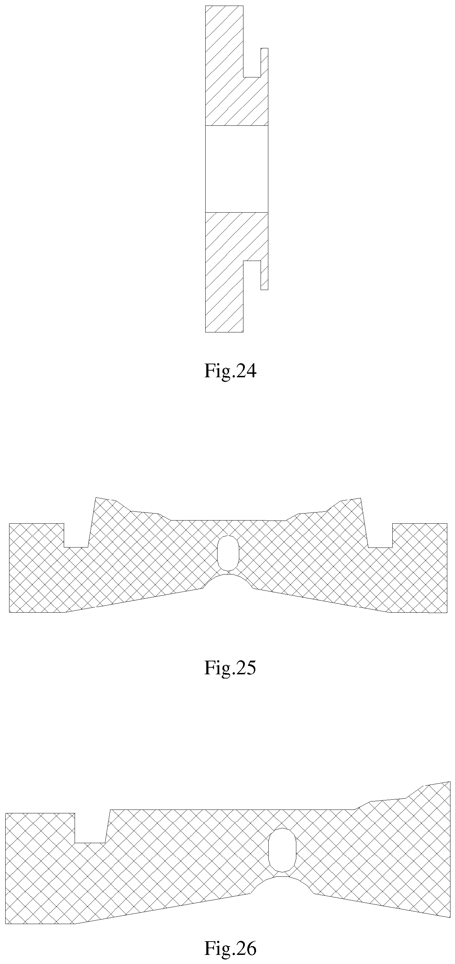

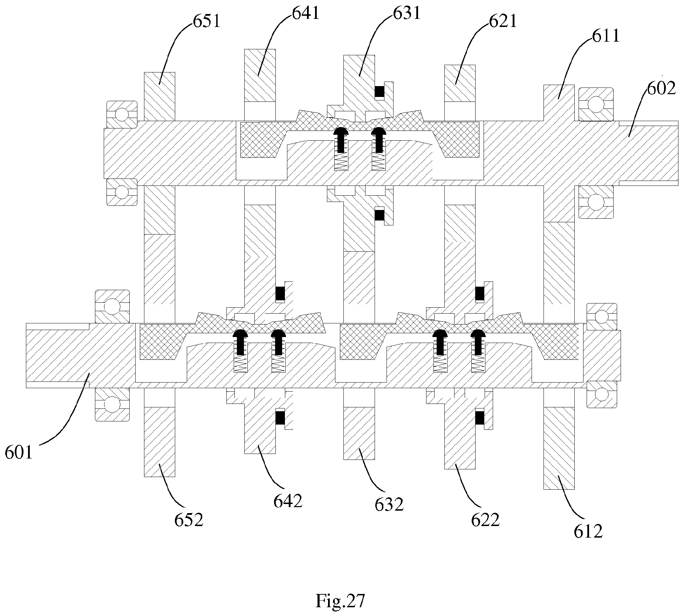

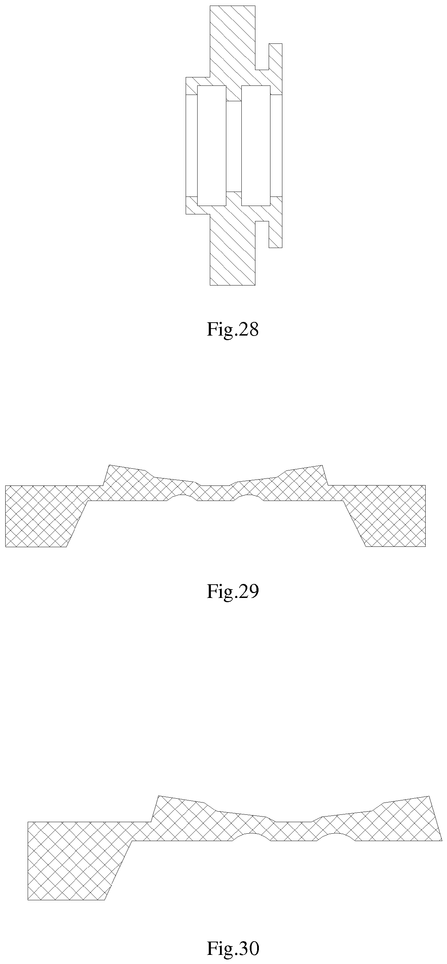

Hereinafter, the present invention will be described with reference to the accompanying drawings of Fig.3 to Fig.30 in terms of the overrunning transmission device convenient for rotation direction switching and speed switching. Wherein the first embodiment to third embodiment relate to an overrunning transmission device convenient for rotation direction switching and the fourth embodiment to sixth embodiment relate to an overrunning transmission device convenient for speed switching.

Figs. 3 to 11 show the first embodiment of the present invention.

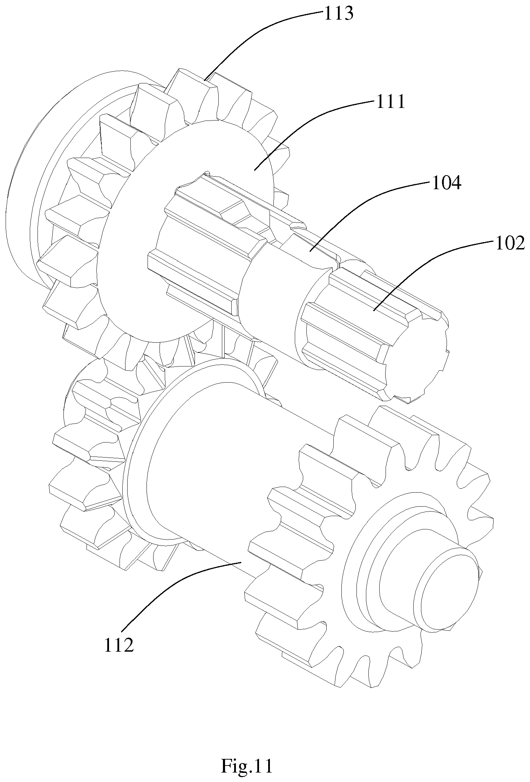

As shown in Fig.3, the overrunning transmission device convenient for rotation direction switching comprises an output gear 101 and a driving shaft 102, wherein the driving shaft 102 provides power for the rotation of the output gear 101. A forward gear 103 is provided at an end of the driving shaft 102 close to the output gear 101, the forward gear 103 and the output gear 101 are engaged with each other and the driving shaft 102 can drive the output gear 101 to rotate forward by means of the forward gear 103. As shown in Fig.11, it should be noted that the location or section of the driving shaft 102, where the forward gear 103 is arranged, is a smooth rod segment without spline, while the position of forward gear 103 on the driving shaft 102 is fixed so that the forward gear 103 can be fixedly engaged with the output gear 101.

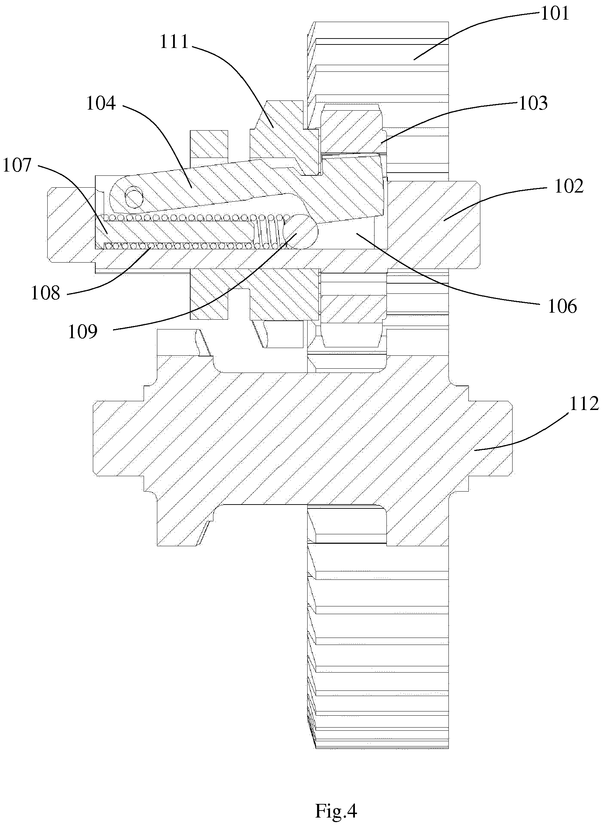

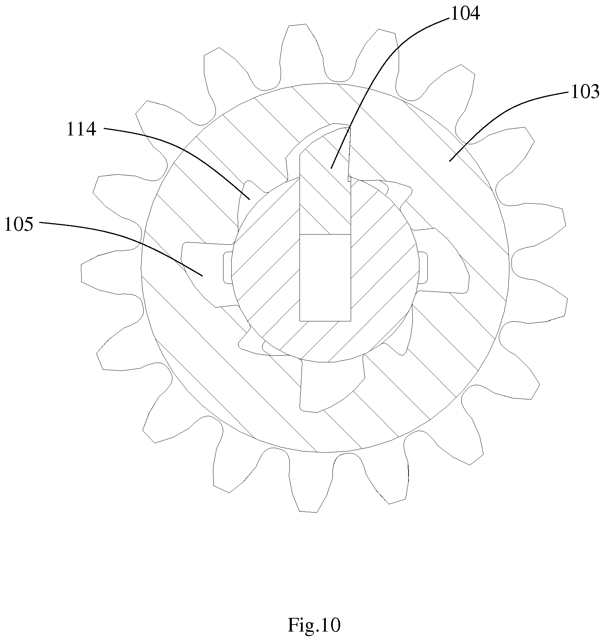

As shown in Fig.4 and Fig.10, a clamping plate 104 is provided on the driving shaft 102, there is at least one clamping groove 105 arranged on the edge of the shaft hole of forward gear 103. Wherein an end of clamping plate 104 can move radially in the shaft hole of forward gear 103 so that the end of clamping plate 104 can enter into the clamping groove 105, which makes the driving shaft 102 engage with the forward gear 103, thus the driving shaft 102 can drive the output gear 101 to rotate forward by means of the forward gear 103.

As shown in Fig.4, the driving shaft 102 is provided with a chamber 106, and the clamping plate 104 is placed in the chamber 106. One end of clamping plate 104 is pivotally connected to a sidewall of the chamber 106 (i.e. clamping plate 104 can rotate around the shaft), while the other end of clamping plate 104 is movably disposed in the shaft hole of forward gear 103. An elastic component is provided between the bottom of clamping plate 104 and the bottom of chamber 106, the elastic component provides power for the end of clamping plate 104 to move radially in the shaft hole of forward gear 103.

As shown in Fig.4 to Fig. 7, in the embodiment, the elastic component comprises a pin 107 and a spring 108, wherein the pin 107 is axially arranged in the chamber 106 and the spring 108 is sleeved on the pin 107, a drum-shaped ball 109 is arranged between the other end of spring 108, and the bottom of the end of clamping plate 104 is close to the forward gear 103. The pin 107 has a round flat head and a stem portion, the diameter of round flat head is greater than the diameter of the stem portion. The round flat head of pin 107 abuts against the end side wall of the chamber 106, and spring 108 can stretch linearly so that the clamping plate 104 can make an accurate radial movement.

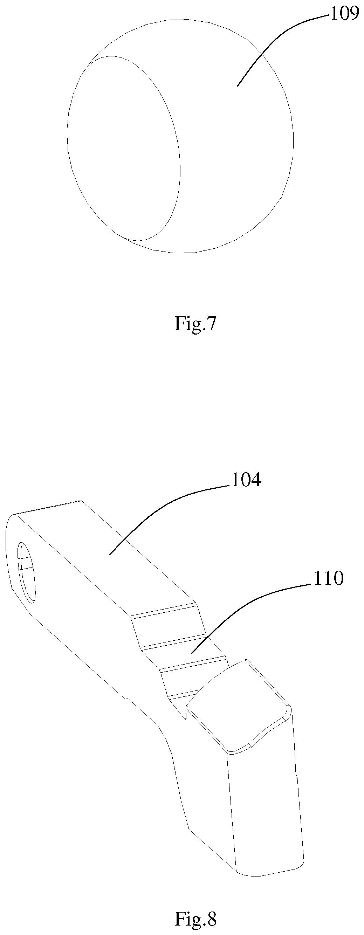

As shown in Fig.4 and Fig.8, the top of clamping plate 104 is provided with a step-shaped position-limiting surface 110, and the height of stepped position-limiting surface 110 becomes higher gradually in the direction away from forward gear 103. In addition, a slide unit 111 is sleeved on the driving shaft 102, the inner edge of the shaft hole of slide unit 111 abuts against or contacts with the position-limiting surface 110 of the clamping plate 104, and slide unit 111 can move back and forth on the position-limiting surface 110, such that the end of clamping plate 104 can move radially in the shaft hole of forward gear 103. It should be noted that the slide unit 111 engages with the driving shaft 102 via internal and external splines, so as to make sure that the inner edge of the shaft hole of slide unit 111 can abut against or contact with the position-limiting surface 110 at a desired position accurately. In addition, the slide unit 111 is connected with a gearshift mechanism of a motor vehicle (not shown), the slide unit 111 can be moved back and forth on the position-limiting surface 110 by means of the gearshift mechanism (the specific connection of slide unit 111 to the gearshift mechanism may refer to the prior art).

As shown in Fig.8, the position-limiting surface 110 comprises three gear surfaces, respectively are a non-overrunning forward gear surface, an overrunning forward gear surface and a reverse gear surface. Wherein the non-overrunning forward gear surface is close to the forward gear 103, the reverse gear surface is away from the forward gear 103, and the overrunning forward gear surface is located in the middle. The height of position-limiting surface 110 or gear surfaces becomes higher in the direction away from forward gear 103 gradually.

As shown in Fig.10, the opening of the clamping groove 105 faces toward the driving shaft 102. The bottom wall of clamping groove 105 is an inclined plane, and in the rotational direction of driving shaft 102, the depth of the forepart of clamping groove 105 is greater than that of the rear part. The end of clamping plate 104, which is movably disposed in the shaft hole of forward gear 103, has a similar shape with clamping groove 105, whose top surface is also an inclined plane, the shape and inclined direction of the inclined plane are consistent with the bottom wall of clamping groove 105.

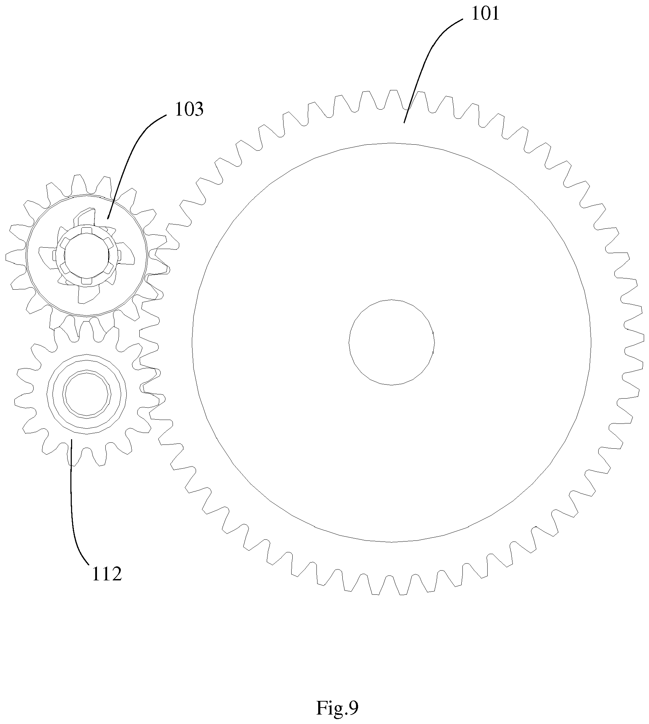

As shown in Fig.9 and Fig.10, when the vehicle is switched to move forward, in order to ensure the smoothness and softness, the edge of the shaft hole of forward gear 103 is provided with four clamping grooves 105, the four clamping grooves 105 are evenly arranged, and small buffer groove 114 is arranged between each two adjacent clamping grooves 105. Wherein the shape of buffer groove 114 is similar to the clamping grooves 105, the only difference lies in depth. It should be noted that the depth of buffer groove 114 is equal to the depth of the end of clamping plate 104 when it is partially inserted into clamping grooves 105, so that a reasonable structural thickness can be maintained between the clamping grooves 105 and buffer groove 114, thus ensuring the overall strength of the forward gear 103.

According to the above-described structure, and under the action of the elastic component, the end of clamping plate 104 can be engaged with the clamping grooves 105 smoothly in the moment the driving shaft 102 rotates, even when the end of clamping plate 104 is in conflict with the projections on both sides of the clamping grooves 105, thus ensuring a successful and smooth switch when the output gear 101 is switched to rotate forward.

As shown in Fig. 3 and Fig.11, the overrunning transmission device convenient for rotation direction switching further comprises a reverse gear set 112, and the reverse gear set 112 is configured to make the output gear 101 rotate in reverse direction. In addition, in the embodiment, the slide unit 111 is provided with meshing teeth 113 on the outer circumference, one end of reverse gear set 112 is engaged with output gear 101, the other end can be engaged with or separated from the meshing teeth 113 arranged on the outer circumference of slide unit 111. When the meshing teeth 113 are engaged with the end of the reverse gear set 112, the driving shaft 102 is able to drive the reverse gear set 112 to rotate via the slide unit 111, thus making the output gear 101 rotate in reverse direction.

Hereinafter, the operation of "rotation direction switching" will be described with reference to the accompanying drawings as follow:

To make the output gear 101 rotate in forward direction: operate the gearshift mechanism, and make the slide unit 111 move toward the forward gear 103, that is to say, making the inner edge of the shaft hole of slide unit 111 abuts against or contacts with the position-limiting surface 110 at the gear surfaces close to forward gear 103 (i.e. the inner edge contacts with the non-overrunning forward gear surface or the overrunning forward gear surface). Under the action of elastic component (comprising a pin 107, a spring 108 and a ball 109), the end of clamping plate 104 enters into clamping groove 105. Thus the driving shaft 102 is engaged with the forward gear 103 and can drive the output gear 101 to rotate forward by means of the forward gear 103.

To make the output gear 101 rotate in reverse direction: operate the gearshift mechanism, and make the slide unit 111 move away from the forward gear 103, that is to say, making the inner edge of the shaft hole of slide unit 111 abuts against or contacts with the position-limiting surface 110 at the gear surface away from the forward gear 103 (i.e. the inner edge contacts with the reverse gear surface). Under the pressure exerted by the inner edge of the shaft hole of slide unit 111, the end of clamping plate 104 slides out of the clamping groove 105. Meanwhile the meshing teeth 113, which arranged on the slide unit 111, are engaged with the end of reverse gear set 112. Thus the driving shaft 102 can drive the output gear 101 to rotate in reverse direction by means of the slide unit 111 and the reverse gear set 112.

In the overrunning transmission device convenient for rotation direction switching of the present invention, the output gear is driven to rotate by means of the coupling or engaging between mechanical structures, rather than through the coupling or engaging between gears (especially for the gears with a large difference in diameter), thus greatly improving the success rate and smoothness for the output gear to switch between forward and reverse rotation.

Hereinafter, as to the overrunning transmission device convenient for rotation direction switching, the operation of "non-overrunning" and "overrunning" will be described with reference to the accompanying drawings as follow:

When the inner edge of the shaft hole of slide unit 111 abuts against or contacts with the position-limiting surface 110 at the gear surface closest to forward gear 103 (i.e. the inner edge contacts with the non-overrunning forward gear surface), under the action of elastic component, the end of clamping plate 104 completely enters into the clamping groove 105 (i.e. the distance between the lower side of the inclined top surface of clamping plate 104 and the axis of the driving shaft 102 is greater than the radius of driving shaft 102.), in the circumstance, the driving shaft 102 drives the output gear 101 to rotate forward by means of the forward gear 103. When the rotational speed of the output gear 101 is greater than the rotational speed of driving shaft 102 in the process of driving, that is to say, the phenomenon of "overrunning" occurs, since the end of clamping plate 104 completely enters into clamping groove 105 and cannot be removed outside from the clamping groove 105, the driving shaft 102 and the forward gear 103 are kept in coupled state with each other all the way. Thus the output gear 101 drive the engine to operate by means of the driving shaft 102 and forward gear 103, so as to provide an extra auxiliary brake and force the motor vehicle to slow down, which ensures a safe driving for motor vehicles under special circumstances (e.g. downhill).

When the inner edge of the shaft hole of slide unit 111 abuts against or contacts with the position-limiting surface 110 at the middle gear surface (i.e. the inner edge contacts with the overrunning forward gear surface), the end of clamping plate 104 partially enters into clamping groove 105 (i.e. the distance between the lower side of the inclined top surface of clamping plate 104 and the axis of the driving shaft 102 is less than or equal to the radius of driving shaft 102.), in the circumstance, the driving shaft 102 still drives the output gear 101 to rotate forward by means of the forward gear 103. When the phenomenon of "overrunning" occurs, since the end of clamping plate 104 partially enters into clamping groove 105 and can be removed outside from clamping groove 105 (owing to the shape of the end of clamping plate 104, the shape of clamping groove 105 and the configuration of elastic component), the coupling between the driving shaft 102 and the forward gear 103 is released. Thus the output gear 101 only drives the forward gear 103 to rotate almost in an unloaded state, which greatly reduces the inertia energy loss of a motor vehicle during the "overrunning" process and avoids wasting fuel when the engine is in idle condition.

In the overrunning transmission device convenient for rotation direction switching of the present invention, the end of clamping plate can partially enter into clamping groove. When the phenomenon of "overrunning" occurs, the coupling between driving shaft and forward gear can be released. In this state, the output gear only drives the forward gear to rotate almost in an unloaded state, which greatly reduces the inertia energy loss of motor vehicle and avoids wasting fuel when the engine operates in "overrunning" state. On the other hand, when the "overrunning" state is not required or allowed, the end of clamping plate can completely enter into the clamping groove, thus avoiding the occurrence of "overrunning" and improving the safety.

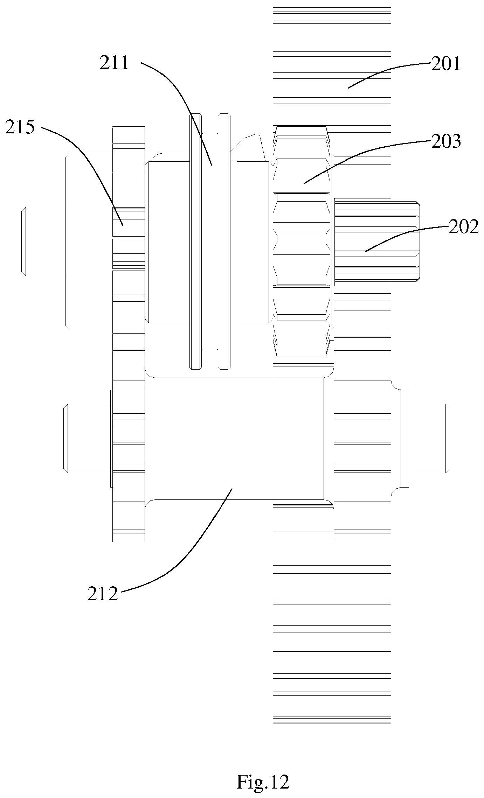

Figs. 12 to 17 show the second embodiment of the present invention.

Compared with the first embodiment, the differences of second embodiment lie in the structure of clamping plate. The differences will be described below, and the contents similar to those of the first embodiment will be omitted.

As shown in Fig. 12, the overrunning transmission device convenient for rotation direction switching comprises an output gear 201, a driving shaft 202 and a reverse gear set 212, wherein the driving shaft 202 provides power for the rotation of the output gear 201, and the reverse gear set 212 is configured to make the output gear 201 rotate in reverse direction.

A forward gear 203 is provided at an end of the driving shaft 202 close to the output gear 201, the forward gear 203 and the output gear 201 are engaged with each other and the driving shaft 202 can drive the output gear 201 to rotate forward by means of the forward gear 203. A coupling gear 215 is provided at an end of the driving shaft 202 away from the output gear 201, the coupling gear 215 is engaged with one end of the reverse gear set 212, and the other end of reverse gear set 212 is engaged with the output gear 201. The driving shaft 202 is able to drive reverse gear set 212 to rotate via coupling gear 215, thus making the output gear 201 rotate in reverse direction.

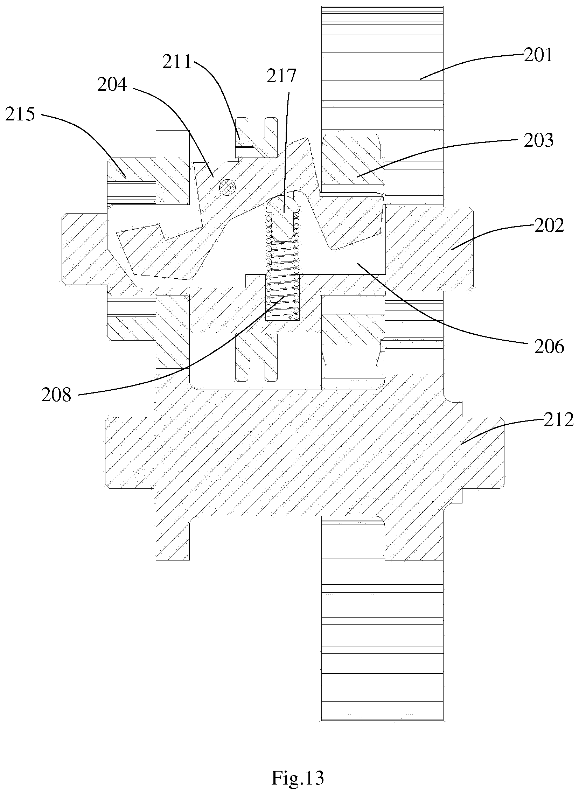

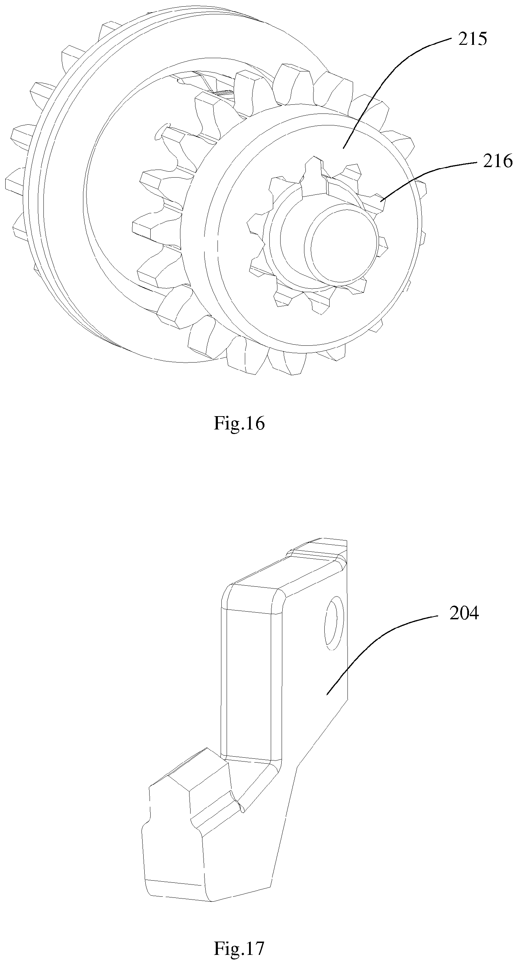

As shown in Fig.13 and Fig.16, a clamping plate 204 is provided on the driving shaft 202, at least one clamping groove 205 is arranged on the edge of the shaft hole of forward gear 203, and at least one coupling groove 216 is arranged on the inner edge of the shaft hole of coupling gear 215. Wherein one end of the clamping plate 204 can move radially in the shaft hole of forward gear 203 so that the end of clamping plate 204 can enter into the clamping groove 205, which makes the driving shaft 202 engage with the forward gear 203, thus the driving shaft 202 can drive the output gear 201 to rotate forward. While the other end of clamping plate 204 can move radially in the shaft hole of coupling gear 215 so that the other end of clamping plate 204 can enter into the coupling groove 216 of coupling gear 215, which makes the driving shaft 202 engage with the coupling gear 215, thus the driving shaft 202 can drive the output gear 201 to rotate reversely.

As shown in Fig.13 to Fig.15, the driving shaft 202 is provided with a chamber 206, and the clamping plate 204 is placed in the chamber 206. Wherein the upper part (i.e. the shoulder portion) of clamping plate 204 is pivotally connected to a sidewall of the chamber 206. Wherein one end of clamping plate 204 is movably disposed in the shaft hole of forward gear 203, the other end of clamping plate 204 is movably disposed in the shaft hole of coupling gear 215.

As shown in Fig.13, in this embodiment, the position where the clamping plate 204 is connected to the sidewall of chamber 206 is close to the coupling gear 215. An elastic component is provided between the bottom of clamping plate 204 and the bottom of chamber 206, the elastic component is arranged near the forward gear 203. As shown in Fig.13 to Fig.15, in this embodiment, the elastic component comprises a spring 208 which is radially arranged. The bottom of chamber 206 is provided with a hole, the sidewall of chamber 206 is provided with a curved groove, the curved groove extends in the same direction as the hole (i.e. opening direction of the hole). One end of spring 208 is arranged in the hole, the other end is restrained by the curved groove. A semi-spherical pin 217 is provided between the other end of the spring 208 and the bottom of clamping plate 204, in the semi-spherical pin 217, the diameter of the head portion is greater than the stem portion.

As shown in Fig.13, the top of clamping plate 204 is provided with a step-shaped position-limiting surface 210, and the height of stepped position-limiting surface 210 becomes lower in the direction away from forward gear 203 gradually. In this embodiment, the position-limiting surface 210 comprises three gear surfaces, respectively are a non-overrunning forward gear surface, an overrunning forward gear surface and a reverse gear surface. Wherein the reverse gear surface is close to forward gear 203, the non-overrunning forward gear surface is close to coupling gear 215, and the overrunning forward gear surface is located in the middle.

As shown in Fig. 12, a slide unit 211 is sleeved on the driving shaft 202, the inner edge of the shaft hole of slide unit 211 abuts against or contacts with the position-limiting surface 210 of clamping plate 204, the slide unit 211 can move on the position-limiting surface 210 in the axial direction of driving shaft 202 such that the two ends of clamping plate 204 can move radially in the shaft holes of the forward gear 203 and the coupling gear 215 respectively.

As shown in Fig.16 and Fig.17, the opening of coupling groove 216 faces toward the driving shaft 202, the shape of coupling groove 216 consists of two parts, the first part is rectangular (i.e. the opening section), the second part is V-shaped (i.e. the bottom wall), the shape of the end of clamping plate 204 can match with that of the coupling groove 216 well. In addition, a number of coupling grooves 216 are arranged on the inner edge of the shaft hole of coupling gear 215, each two adjacent coupling grooves 216 are closely connected with each other. The coupling grooves 216 can be engaged with the clamping plate 204 smoothly via the principle of automatically giving way to each other in a slight collision process, even when the spike between adjacent coupling grooves 216 is in conflict with the spike on the end of clamping plate 204.

In addition, in this embodiment, the shape and function of the clamping groove 205 are similar to that of the first embodiment, the same contents are omitted.

Hereinafter, as to the overrunning transmission device convenient for rotation direction switching, the operation of "rotation direction switching" will be described with reference to the accompanying drawings as follow:

To make the output gear 201 rotate in forward direction: operate the gearshift mechanism, and make the slide unit 211 move toward the coupling gear 215, that is to say, making the inner edge of the shaft hole of slide unit 211 abuts against or contacts with the position-limiting surface 210 at the gear surfaces close to coupling gear 215 (i.e. the inner edge contacts with the non-overrunning forward gear surface or the overrunning forward gear surface). In this state, one end of the clamping plate 204 enters into the clamping groove 205 of forward gear 203, while the other end of clamping plate 204 is separated from the coupling groove 216 of coupling gear 215. Thus the driving shaft 202 is engaged with the forward gear 203 and can drive the output gear 201 to rotate forward by means of the forward gear 203.

To make the output gear 201 rotate in reverse direction: operate the gearshift mechanism, and make the slide unit 211 move toward forward gear 203, that is to say, making the inner edge of the shaft hole of slide unit 211 abuts against or contacts with the position-limiting surface 210 at the gear surface close to forward gear 203 (i.e. the inner edge contacts with the reverse gear surface). In this state, one end of the clamping plate 204 enters into the coupling groove 216 of coupling gear 215, while the other end of clamping plate 204 is separated from the clamping groove 205 of the forward gear 203. Thus the driving shaft 202 is engaged with the coupling gear 215 and can drive the output gear 201 to rotate in reverse direction by means of the coupling gear 215 and reverse gear set 212.

Hereinafter, as to the overrunning transmission device convenient for rotation direction switching, the operation of "non-overrunning" and "overrunning" will be described with reference to the accompanying drawings as follow:

When the inner edge of the shaft hole of slide unit 211 abuts against or contacts with the position-limiting surface 210 at the gear surface closest to coupling gear 215 (i.e. the inner edge contacts with the non-overrunning forward gear surface), one end of the clamping plate 204 completely enters into the clamping groove 205 of forward gear 203 (similar to the first embodiment), the other end is separated from the coupling groove 216 of coupling gear 215. In the circumstance, the driving shaft 202 drives the output gear 201 to rotate forward by means of the forward gear 203. When the rotational speed of the output gear 201 is greater than the rotational speed of driving shaft 202 in the process of driving, that is to say, the phenomenon of "overrunning" occurs, since the end of clamping plate 204 completely enters into clamping groove 205 and cannot be removed outside from clamping groove 205, the driving shaft 202 and forward gear 203 are kept in coupled state with each other all the way. Thus the output gear 201 drives the engine to operate by means of the driving shaft 202 and the forward gear 203, so as to provide an extra auxiliary brake and force the motor vehicle to slow down, which ensures a safe driving for motor vehicles under special circumstances (e.g. downhill).

When the inner edge of the shaft hole of slide unit 211 abuts against or contacts with the position-limiting surface 210 at the middle gear surface (i.e. the inner edge contacts with the overrunning forward gear surface), one end of clamping plate 204 partially enters into the clamping groove 205 of the forward gear 203 (similar to the first embodiment), the other end is separated from the coupling groove 216 of coupling gear 215. In the circumstance, the driving shaft 202 still drives the output gear 201 to rotate forward by means of the forward gear 203. When the phenomenon of "overrunning" occurs, since the end of clamping plate 204 partially enters into clamping groove 205 and can be removed outside from clamping groove 205, the coupling between the driving shaft 202 and forward gear 203 is released. Thus the output gear 201 only drives the forward gear 203 to rotate almost in an unloaded state, which greatly reduces the inertia energy loss of motor vehicle during the "overrunning" process and avoids wasting fuel when the engine is in idle condition.

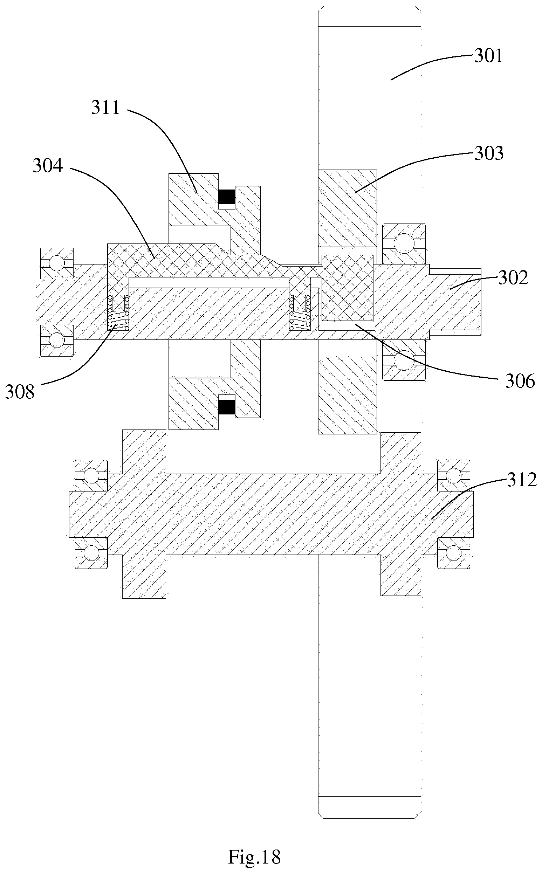

Fig.18 shows the third embodiment of the present invention.

Compared with the first embodiment, the difference of second embodiment is that clamping plate 304 is freely provided in chamber 306. The difference will be described below and the contents similar to those of the first embodiment will be omitted.

Specifically, clamping plate 304 is freely arranged in the chamber 306, that is to say, the clamping plate 304 is not connected with the chamber 306. One end of clamping plate 304 is movably disposed in the shaft hole of forward gear 303, the bottom of clamping plate 304 is provided with a guiding cylinders, the bottom wall of chamber 306 is provided with a receiving holes, the elastic elements (i.e. springs 308) are arranged between the guiding cylinder and the bottom wall of chamber 306, the elastic elements are disposed in the radial direction of the driving shaft. There are at least two springs 308, the at least two springs 308 are separately arranged. Wherein one end of the spring 308 is sheathed or sleeved on the guiding cylinder, the other end is inserted into the receiving hole and contacts with the bottom surface of receiving hole. Under the action of elastic elements, the end (movably disposed in the shaft hole of forward gear 303) of clamping plate 304 can move radially in the shaft hole of forward gear 303 so that the end of clamping plate 304 can enter into the clamping groove 305.

In addition, in this embodiment, other structures and mechanical principles are similar to that of the first embodiment, the same contents are omitted.

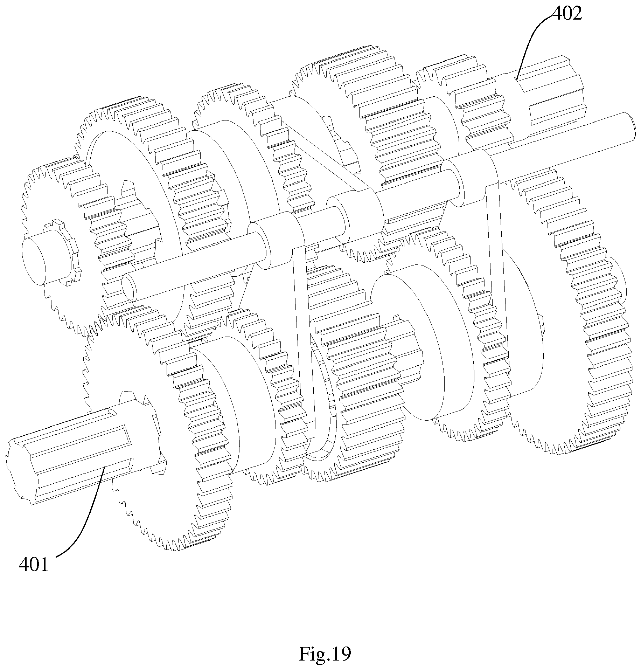

Figs. 19 to 22 show the fourth embodiment of the present invention.

As shown in Fig. 19, the overrunning transmission device convenient for speed switching comprises an output shaft 401, a driving shaft 402 and a transmission gear set, etc. Driving shaft 402 provides power for the rotation of the output shaft 401, there are at least two transmission gear sets, and each transmission gear set transmits a different speed, so as to make the output shaft 401 to rotate in high speed and low speed. Each transmission gear set comprises a driving gear and a driven gear that are engaged with each other, wherein the driving gear is sleeved on the driving shaft 402, and the driven gear is sleeved on the output shaft 401. It should be noted that the driving gear is capable of engaging with and separating from the driving shaft 402, or the driven gear is capable of engaging with and separating from the output shaft 401.

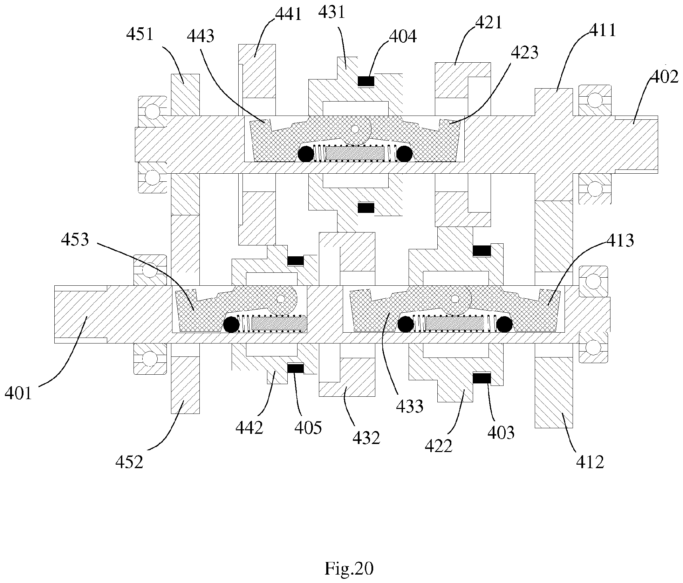

As shown in Fig.20, in this embodiment, the overrunning transmission device comprises five transmission gear sets that connected in sequence. Wherein, in the first transmission gear set, the driven gear 412 is capable of engaging with and separating from the output shaft 401; in the second transmission gear set, the driving gear 421 is capable of engaging with and separating from the driving shaft 402; in the third transmission gear set, the driven gear 432 is capable of engaging with and separating from the output shaft 401; in the fourth transmission gear set, the driving gear 441 is capable of engaging with and separating from the driving shaft 402; in the fifth transmission gear set, the driven gear 452 is capable of engaging with and separating from the output shaft 401. In this embodiment, it should be noted that the first transmission gear set corresponds to first gear of vehicle, the second transmission gear set corresponds to third gear of vehicle, the third transmission gear set corresponds to fourth gear of vehicle, the fourth transmission gear set corresponds to fifth gear of vehicle, and the fifth transmission gear set corresponds to second gear of vehicle.

In the aforesaid gears and shafts that are capable of engaging with and separating from each other, the shafts pass through the shaft hole of the gears, at least one clamping groove is arranged on the edge of the shaft hole of gears, a chamber is provided on the shafts, a clamping plate is arranged in the chamber. Wherein the end of clamping plate can move back and forth within the chamber in radial direction of the gears, thus the end of clamping plate can be inserted into or removed outside from the clamping groove, so that the aforesaid shafts are capable of engaging with and separating from the gears.

Clamping plate is axially arranged in chamber, i.e. the clamping plate is parallel to the axis of the shaft, an elastic component is provided in the chamber. The elastic component contacts with the bottom of clamping plate at one side, and the elastic component can drive the end of clamping plate to move along the radial direction of the gear. The top of clamping plate is provided with a step-shaped position-limiting surface, a slide unit is sleeved on the shaft, the inner edge of the shaft hole of slide unit abuts against or contacts with the position-limiting surface of clamping plate and can move back and forth on the step-shaped position-limiting surface, thus making the end of clamping plate move along the radial direction of the gear back and forth.

Similar to the first embodiment, one end of the clamping plate is pivotally connected to a sidewall of the chamber, and the other end of clamping plate is movably disposed in the shaft hole of the gear. Elastic component is arranged in the axial direction of the shaft, the end of elastic component contacts with the bottom of the end of clamping plate which is movably disposed in the shaft hole of the gear, and the end of elastic component can drive the end of clamping plate to move along the radial direction of the gear, thus making the end of clamping plate insert into the clamping groove. Specifically, the elastic component comprises a spring, and the spring is placed in the chamber and arranged in the axial direction of the shaft. A drum-shaped ball is connected to the end of spring, the spring contacts with the bottom of the end of clamping plate which is movably disposed in the shaft hole of the gear via the drum-shaped ball.

In this embodiment, the driving gear 431 of the third transmission gear set can be used as a slide unit in the second transmission gear set and the fourth transmission gear set, the driven gear 422 of the second transmission gear set can be used as a slide unit in the first transmission gear set and the third transmission gear set, and the driven gear 442 of the fourth transmission gear set can be used as a slide unit in the fifth transmission gear set.

In addition, in this embodiment, other structures and mechanical principles are similar to that of the first embodiment, the same contents are omitted.

Hereinafter, as to the overrunning transmission device convenient for speed switching, the operation of "speed switching" and "overrunning" will be described with reference to the accompanying drawings as follow:

The separation state of the first transmission gear set: the inner edge of the shaft hole of driven gear 422 (the driven gear 422 is arranged in the second transmission gear set) abuts against or contacts with the separated gear surface of clamping plate 413 (the clamping plate 413 is arranged in the first transmission gear set), thus the clamping plate 413 is separated from the driven gear 412 of the first transmission gear set. That is to say, the first transmission gear set is in a separated state.

The overrunning coupling state of the first transmission gear set: drive the driven gear 422 to move toward the driven gear 412 of the first transmission gear set via shifting board 403, and make the inner edge of the shaft hole of driven gear 422 abuts against or contacts with the overrunning coupling gear surface of clamping plate 413. Under the action of spring, the clamping plate 413 is driven to rotate upwards and partially engaged with driven gear 412. That is to say, the first transmission gear set is in an overrunning coupling state.

The non-overrunning coupling state of the first transmission gear set: drive the driven gear 422 to move toward the driven gear 412 of the first transmission gear set via shifting board 403, and make the inner edge of the shaft hole of driven gear 422 abuts against or contacts with the non-overrunning coupling gear surface of clamping plate 413. Under the action of spring, the clamping plate 413 is driven to rotate upwards and completely engaged with the driven gear 412. That is to say, the first transmission gear set is in a non-overrunning coupling state.

The separation state of the second transmission gear set: the inner edge of the shaft hole of driving gear 431 (the driving gear 431 is arranged in the third transmission gear set) abuts against or contacts with the separated gear surface of the clamping plate 423 (the clamping plate 423 is arranged in the second transmission gear set), thus clamping plate 423 is separated from the driving gear 421 of the second transmission gear set. That is to say, the second transmission gear set is in a separated state.

The overrunning coupling state of the second transmission gear set: drive the driving gear 431 to move toward the driving gear 421 of the second transmission gear set via the shifting board 404, and make the inner edge of the shaft hole of driving gear 431 abuts against or contacts with the overrunning coupling gear surface of clamping plate 423. Under the action of spring, clamping plate 423 is driven to rotate upwards and partially engaged with the driving gear 421. That is to say, the second transmission gear set is in an overrunning coupling state.

The non-overrunning coupling state of the second transmission gear set: drive the driving gear 431 to move toward the driving gear 421 of the second transmission gear set via shifting board 404, and make the inner edge of the shaft hole of driving gear 431 abuts against or contacts with the non-overrunning coupling gear surface of the clamping plate 423. Under the action of spring, the clamping plate 423 is driven to rotate upwards and completely engaged with driving gear 421. That is to say, the second transmission gear set is in a non-overrunning coupling state.

The separation state of the third transmission gear set: the inner edge of the shaft hole of driven gear 422 (the driven gear 422 is arranged in the second transmission gear set) abuts against or contacts with the separated gear surface of the clamping plate 433 (the clamping plate 433 is arranged in the third transmission gear set), thus the clamping plate 433 is separated from the driven gear 432 of the third transmission gear set. That is to say, the third transmission gear set is in a separated state.

The overrunning coupling state of the third transmission gear set: drive the driven gear 422 to move toward the driven gear 432 of the third transmission gear set via shifting board 403, and make the inner edge of the shaft hole of driven gear 422 abuts against or contacts with the overrunning coupling gear surface of clamping plate 433. Under the action of spring, the clamping plate 433 is driven to rotate upwards and partially engaged with driven gear 432. That is to say, the third transmission gear set is in an overrunning coupling state.

The non-overrunning coupling state of the third transmission gear set: drive the driven gear 422 to move toward the driven gear 432 of the third transmission gear set via shifting board 403, and make the inner edge of the shaft hole of driven gear 422 abuts against or contacts with the non-overrunning coupling gear surface of clamping plate 433. Under the action of spring, the clamping plate 433 is driven to rotate upwards and completely engaged with driven gear 432. That is to say, the third transmission gear set is in a non-overrunning coupling state.

The separation state of the fourth transmission gear set: the inner edge of the shaft hole of driving gear 431 (the driving gear 431 is arranged in the third transmission gear set) abuts against or contacts with the separated gear surface of the clamping plate 443 (the clamping plate 443 is arranged in the fourth transmission gear set), thus clamping plate 443 is separated from the driving gear 441 of the fourth transmission gear set. That is to say, the fourth transmission gear set is in a separated state.

The overrunning coupling state of the fourth transmission gear set: drive the driving gear 431 to move toward the driving gear 441 of the fourth transmission gear set via shifting board 404, and make the inner edge of the shaft hole of th driving gear 431 abuts against or contacts with the overrunning coupling gear surface of clamping plate 443. Under the action of spring, the clamping plate 443 is driven to rotate upwards and partially engaged with driving gear 441. That is to say, the fourth transmission gear set is in an overrunning coupling state.

The non-overrunning coupling state of the fourth transmission gear set: drive the driving gear 431 to move toward the driving gear 441 of the fourth transmission gear set via shifting board 404, and make the inner edge of the shaft hole of driving gear 431 abuts against or contacts with the non-overrunning coupling gear surface of clamping plate 443. Under the action of spring, clamping plate 443 is driven to rotate upwards and completely engaged with driving gear 441. That is to say, the fourth transmission gear set is in a non-overrunning coupling state.

The separation state of the fifth transmission gear set: the inner edge of the shaft hole of driven gear 442 (the driven gear 442 is arranged in the fourth transmission gear set) abuts against or contacts with the separated gear surface of clamping plate 453 (the clamping plate 453 is arranged in the fifth transmission gear set), thus the clamping plate 453 is separated from the driven gear 452 of the fifth transmission gear set. That is to say, the fifth transmission gear set is in a separated state.

The overrunning coupling state of the fifth transmission gear set: drive the driven gear 442 to move toward the driven gear 452 of the fifth transmission gear set via shifting board 405, and make the inner edge of the shaft hole of driven gear 442 abuts against or contacts with the overrunning coupling gear surface of the clamping plate 453. Under the action of spring, clamping plate 453 is driven to rotate upwards and partially engaged with driven gear 452. That is to say, the fifth transmission gear set is in an overrunning coupling state.

The non-overrunning coupling state of the fifth transmission gear set: drive the driven gear 442 to move toward the driven gear 452 of the fifth transmission gear set via shifting board 405, and make the inner edge of the shaft hole of driven gear 442 abuts against or contacts with the non-overrunning coupling gear surface of the clamping plate 453. Under the action of spring, clamping plate 453 is driven to rotate upwards and completely engaged with driven gear 452. That is to say, the fifth transmission gear set is in a non-overrunning coupling state.

The above descriptions are based on five transmission gear sets, however it should be noted that the present invention is not limited to this. According to requirement, the overrunning transmission device can comprises six or more transmission gear sets and operates in the same way as above. In addition, the structures for steering switch or rotation direction switch described in the embodiments 1-3 (i.e. the first embodiment to third embodiment) can be applied to here (the fourth embodiment) such that rotation direction switching and speed switching can be realized in the same device.

Fig. 19 and Figs. 23 to 26 show the fifth embodiment of the present invention.

The structure of this embodiment is similar to section near the forward gear described in the second embodiment and operates in a similar way as the fourth embodiment (the only difference is that the shifting board moves in opposite direction), wherein the same or similar contents are omitted.

Fig. 19 and Figs. 27 to 30 show the sixth embodiment of the present invention.

The structure of this embodiment is similar to section near the forward gear described in the third embodiment and operates in a similar way as the fifth embodiment (the only difference is that the moving direction of the shifting board in this embodiment is opposite to that of the slide unit in the third embodiment.), the same or similar contents are omitted.

In the overrunning transmission device convenient for switching of the present invention, the output gear is driven to rotate by means of the coupling or engaging between the clamping plate and the clamping groove, rather than through the coupling or engaging between gears (especially for the gears with a large difference in diameter) or through the coupling or engaging between claw and hole (the claw and hole are prone to conflict with each other and difficult to engage together), thus greatly improving the success rate and smoothness of switch.

In the overrunning transmission device convenient for switching of the present invention, the end of clamping plate can partially enter into the clamping groove. When the phenomenon of "overrunning" occurs, the coupling between the driving shaft and the transmission gear can be released, which greatly reduces the inertia energy loss of motor vehicle and avoids wasting fuel when the engine operates in "overrunning" state. On the other hand, when the "overrunning" operative state is not required or allowed, the end of clamping plate can completely enter into clamping groove, thus avoiding the occurrence of "overrunning" phenomenon and improving the safety.

Although the overrunning transmission device convenient for switching described in the aforesaid embodiments are based on motor vehicle, however it should be noted that the overrunning transmission device of the present invention can be applied to any other transmission apparatus of any field, such as ship, and aircraft, etc.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An overrunning transmission device convenient for switching, **characterized in that**, comprises a transmission gear and a transmission shaft which is arranged to penetrate a shaft hole of the transmission gear, wherein at least one clamping groove is formed at an edge of the shaft hole of the transmission gear; a chamber is formed in the transmission shaft which extends in the axial direction of the transmission shaft, a clamping plate is provided in the chamber; and an end of the clamping plate can move in the chamber back and forth along the radial direction of the transmission gear, so that the end of the clamping plate can be inserted into or removed outside from the clamping groove, thereby the transmission shaft and the transmission gear can be engaged and separated with each other.

2. The overrunning transmission device convenient for switching of claim 1, **characterized in that**, the clamping plate placed in the chamber is arranged in the axial direction of the transmission shaft, a elastic component is provided in the chamber, the elastic component is arranged between the bottom surface of clamping plate and the bottom surface of chamber, the elastic component can drive the end of clamping plate to move in the radial direction of the transmission gear, the top of clamping plate is provided with a step-shaped position-limiting surface, a slide unit is sleeved on the transmission shaft, the inner edge of the shaft hole of slide unit abuts against or contacts with the position-limiting surface of clamping plate and can move back and forth on the step-shaped position-limiting surface, thus making the end of clamping plate move restrictively back and forth in the radial direction of the transmission gear.

3. The overrunning transmission device convenient for switching of claim 2, **characterized in that**, one end of the clamping plate is pivotally connected to a sidewall of the chamber, and the other end of clamping plate is movably disposed in the shaft hole of the transmission gear, the elastic component is arranged in the axial direction of the transmission shaft, an end of elastic component contacts with the bottom of the end of clamping plate, and the end of elastic component can drive the end of clamping plate to move along the radial direction of the transmission gear, thus driving the end of clamping plate to insert into the clamping groove.

4. The overrunning transmission device convenient for switching of claim 3, **characterized in that**, the elastic component comprises a spring, the spring is placed in the chamber and arranged in the axial direction of the transmission shaft, a drum-shaped ball is connected to the end of the spring which is close to transmission gear, the spring contacts with the bottom of the end of clamping plate which is movably disposed in the shaft hole of the transmission gear via the drum-shaped ball.

5. The overrunning transmission device convenient for switching of claim 4, **characterized in that**, a pin is provided at the end of the spring away from the transmission gear, the pin comprises a round flat head and a stem portion, the diameter of round flat head is greater than that of the stem portion, the round flat head of pin abuts against the end side wall of the chamber, so as to make sure that the spring can stretch linearly.

6. The overrunning transmission device convenient for switching of claim 2, **characterized in that**, the shoulder portion of clamping plate is pivotally connected to a sidewall of the chamber, one end of the clamping plate is movably disposed in the shaft hole of transmission gear, the elastic component placed in the chamber is arranged in the radial direction of the transmission shaft, the end of elastic component, which is movably disposed in the shaft hole of transmission gear, contacts with the bottom of the end of clamping plate, and the end of elastic component can drive the end of clamping plate to move along the radial direction of transmission gear, thus driving the end of clamping plate to insert into the clamping groove.

7. The overrunning transmission device convenient for switching of claim 6, **characterized in that**, the elastic component comprises a spring, the spring is placed in the chamber and arranged in the radial direction of the transmission shaft, a semi-spherical pin is provided at an end of spring, the semi-spherical pin comprises a head portion and a stem portion, the diameter of the head portion is greater than the stem portion, the spring contacts with the bottom of the end of clamping plate via the semi-spherical pin.

8. The overrunning transmission device convenient for switching of claim 2, **characterized in that**, the clamping plate is freely arranged in the chamber, one end of clamping plate is movably disposed in the shaft hole of the transmission gear, the elastic component placed in the chamber is arranged in the radial direction of the transmission shaft, the end of elastic component, which is movably disposed in the shaft hole of transmission gear, contacts with the bottom of the end of clamping plate, and the end of elastic component can drive the end of clamping plate to move along the radial direction of transmission gear, thus driving the end of clamping plate to insert into the clamping groove.

9. The overrunning transmission device convenient for switching of claim 8, **characterized in that**, the elastic component comprises a spring, the spring is placed in the chamber and arranged in the radial direction of the transmission shaft, there are at least two springs, the at least two springs are arranged separately, so as to maintain the balance of the clamping plate.

10. The overrunning transmission device convenient for switching of claim 2, **characterized in that**, the step-shaped position-limiting surface on top of the clamping plate comprises a non-overrunning coupling gear surface and a separated gear surface, when the inner edge of the shaft hole of slide unit abuts against or contacts with the non-overrunning coupling gear surface, the end of clamping plate is completely inserted into clamping groove, transmission shaft is engaged with transmission gear in the mode of "non-overrunning"; when the inner edge of the shaft hole of slide unit abuts against or contacts with the separated gear surface, the end of clamping plate is removed outside from clamping groove, and the transmission shaft is separated from transmission gear.

11. The overrunning transmission device convenient for switching of claim 10, **characterized in that**, the step-shaped position-limiting surface on top of the clamping plate further comprises an overrunning coupling gear surface, when the inner edge of the shaft hole of slide unit abuts against or contacts with the overrunning coupling gear surface, the end of clamping plate is partially inserted into clamping groove, and the transmission shaft is engaged with transmission gear in the mode of "overrunning".

12. The overrunning transmission device convenient for switching of claim 11, **characterized in that**, the opening of the clamping groove faces toward the transmission shaft, the bottom wall of clamping groove is an inclined plane; in the rotational direction of transmission shaft, the depth of the forepart of clamping groove is greater than that of the rear part, the end of clamping plate, which is movably disposed in the shaft hole of transmission gear, has a similar shape with clamping groove, whose top surface is also an inclined plane, the shape and inclined direction of the inclined plane are consistent with the bottom wall of clamping groove.

13. The overrunning transmission device convenient for switching of claim 12, **characterized in that**, the edge of the shaft hole of transmission gear is provided with a number of clamping grooves, the clamping grooves are evenly arranged, and a buffer groove is arranged between each two adjacent clamping grooves.

14. An overrunning transmission device convenient for rotation direction switching, for driving the output gear to rotate forward and reversely, **characterized in that**, comprises:
a driving shaft, used for providing power for the output gear to rotate;
a forward gear, engaged with a output gear, the driving shaft can be engaged with the forward gear so as to drive the output gear to rotate forward;
a reverse gear, engaged with a output gear, the driving shaft can be engaged with the reverse gear so as to drive the output gear to rotate reversely;
wherein the driving shaft passes through the shaft hole of the forward gear, at least one clamping groove is arranged on the edge of the shaft hole of forward gear, a chamber is provided on the driving shaft, a clamping plate is arranged in the chamber, wherein the end of clamping plate can move back and forth within the chamber in radial direction of the forward gear, thus the end of clamping plate can be inserted into or removed outside from the clamping groove, so that the driving shaft are capable of engaging with and separating from the forward gear.

15. The overrunning transmission device convenient for rotation direction switching of claim 14, **characterized in that**, the clamping plate placed in the chamber is arranged in the axial direction of the driving shaft, a elastic component is provided in the chamber, the elastic component is arranged between the bottom surface of clamping plate and the bottom surface of chamber, elastic component can drive the end of clamping plate to move in the radial direction of the forward gear, the top of clamping plate is provided with a step-shaped position-limiting surface, a slide unit is sleeved on the driving shaft, the inner edge of the shaft hole of slide unit abuts against or contacts with the position-limiting surface of clamping plate and can move back and forth on the step-shaped position-limiting surface, thus making the end of clamping plate move back and forth in the radial direction of the forward gear.

16. The overrunning transmission device convenient for rotation direction switching of claim 15, **characterized in that**, the slide unit is provided with meshing teeth on the outer circumference, one end of reverse gear set is engaged with output gear, the other end can be engaged with or separated from the meshing teeth.

17. The overrunning transmission device convenient for rotation direction switching of claim 15, **characterized in that**, a coupling gear is provided at an end of the driving shaft away from the output gear, one end of the reverse gear set is engaged with output gear, the other end of reverse gear set is engaged with the coupling gear; the driving shaft passes through the shaft hole of the coupling gear, at least one coupling groove is arranged on the inner edge of the shaft hole of coupling gear, the other end of the clamping plate, which is arranged in the driving shaft, can move back and forth within the chamber in radial direction of the coupling gear, and the end of clamping plate can be inserted into or removed outside from the coupling groove, so that the driving shaft are capable of engaging with and separating from the coupling gear.

18. The overrunning transmission device convenient for rotation direction switching of claim 17, **characterized in that**, the opening of coupling groove faces toward the driving shaft, the shape of coupling groove consists of two parts, the first part is an opening section which is rectangular, the second part is a bottom wall which is V-shaped, the shape of the end of clamping plate can match with the shape of the coupling groove well.

19. The overrunning transmission device convenient for rotation direction switching of claim 16 or 17, **characterized in that**, the step-shaped position-limiting surface on top of the clamping plate comprises a non-overrunning forward gear surface and a reverse gear surface, when the inner edge of the shaft hole of slide unit abuts against or contacts with the non-overrunning forward gear surface, the end of clamping plate is completely inserted into the clamping groove of forward gear, and the driving shaft is engaged with forward gear in the mode of "non-overrunning"; when the inner edge of the shaft hole of slide unit abuts against or contacts with the reverse gear surface, the end of clamping plate is removed outside from the clamping groove of forward gear, the driving shaft is separated from the forward gear and is engaged with the reverse gear set.

20. The overrunning transmission device convenient for rotation direction switching of claim 19, **characterized in that**, the step-shaped position-limiting surface on top of the clamping plate further comprises an overrunning forward gear surface, when the inner edge of the shaft hole of slide unit abuts against or contacts with the overrunning forward gear surface, the end of clamping plate is partially inserted into the clamping groove of forward gear, the driving shaft is engaged with the forward gear in the mode of "overrunning".

21. An overrunning transmission device convenient for speed switching, for driving the output gear to rotate in high speed and low speed, **characterized in that**, comprises:
a driving shaft, used for providing power for the output shaft to rotate;
at least two transmission gear sets, and each transmission gear set transmits a different speed, so as to drive the output gear to rotate in high speed and low speed;
each transmission gear set comprises a driving gear and driven gear that are engaged with each other, wherein the driving gear is sleeved on the driving shaft, the driven gear is sleeved on output shaft, wherein the driving gear is capable of engaging with and separating from the driving shaft, or the driven gear is capable of engaging with and separating from output shaft;
in the driving gear and driving shaft or the driven gear and output shaft, which are capable of engaging with and separating from each other, the shafts pass through the shaft hole of the gears, at least one clamping groove is arranged on the edge of the shaft hole of gears, a chamber is provided on the shafts, a clamping plate is arranged in the chamber, wherein the end of the clamping plate can move back and forth within the chamber in radial direction of the gears, thus the end of clamping plate can be inserted into or removed outside from the clamping groove, so that the aforesaid shafts are capable of engaging with and separating from the gears.

22. The overrunning transmission device convenient for speed switching of claim 21, **characterized in that**, the clamping plate is axially arranged in chamber, an elastic component is provided in the chamber, the elastic component is arranged between the bottom surface of clamping plate and the bottom surface of chamber, and the elastic component can drive the end of clamping plate to move along the radial direction of the gear, the top of clamping plate is provided with a step-shaped position-limiting surface, a slide unit is sleeved on the shaft, the inner edge of the shaft hole of slide unit abuts against or contacts with the position-limiting surface of clamping plate and can move back and forth on the step-shaped position-limiting surface, thus making the end of clamping plate move back and forth along the radial direction of the gear.

23. The overrunning transmission device convenient for speed switching of claim 22, **characterized in that**, comprises five transmission gear sets which are connected in sequence, wherein:
in the first transmission gear set, the driven gear is capable of engaging with and separating from the output shaft;
in the second transmission gear set, the driving gear is capable of engaging with and separating from the driving shaft;
in the third transmission gear set, the driven gear is capable of engaging with and separating from the output shaft;
in the fourth transmission gear set, the driving gear is capable of engaging with and separating from the driving shaft;
in the fifth transmission gear set, the driven gear is capable of engaging with and separating from the output shaft;
wherein the driving gear of the third transmission gear set can be used as a slide unit in the second transmission gear set and the fourth transmission gear set;
the driven gear of the second transmission gear set can be used as a slide unit in the first transmission gear set and the third transmission gear set; and
the driven gear of the fourth transmission gear set can be used as a slide unit in the fifth transmission gear set.

24. The overrunning transmission device convenient for speed switching of claim 22, **characterized in that**, the step-shaped position-limiting surface on top of the clamping plate comprises a non-overrunning coupling gear surface and a separated gear surface, when the inner edge of the shaft hole of slide unit abuts against or contacts with the non-overrunning coupling gear surface, the end of clamping plate is completely inserted into clamping groove of the gear, the shaft is engaged with the gear in the mode of "non-overrunning"; when the inner edge of the shaft hole of slide unit abuts against or contacts with the separated gear surface, the end of clamping plate is removed outside from the clamping groove of the gear, and the shaft is separated from the gear.

25. The overrunning transmission device convenient for speed switching of claim 24, **characterized in that**, the step-shaped position-limiting surface on top of the clamping plate further comprises an overrunning coupling gear surface, when the inner edge of the shaft hole of slide unit abuts against or contacts with the overrunning coupling gear surface, the end of clamping plate is partially inserted into the clamping groove of the gear, the shaft is engaged with the gear in the mode of "overrunning".
